# EUROPÄISCHE PATENTANMELDUNG

(11) **EP 1 043 641 A2**
(43) Veröffentlichungstag der Anmeldung: **11.10.2000**
(21) Anmeldenummer: 00107656.1
(22) Anmeldetag: 10.04.2000
(51) Int. Cl.: G05B 19/042, G05B 19/05

(54) **Fehlersicheres Automatisierungssystem mit Standard-CPU und Verfahren für ein fehlersicheres Automatisierungssystem**

(30) Priorität: 09.04.1999 DE 19916045
(71) Anmelder: SIEMENS AKTIENGESELLSCHAFT, 80333 München (DE)
(72) Erfinder: Schenk, Andreas, Dipl.-Ing., 91052 Erlangen (DE); Barthel, Herbert, Dipl.-Ing., 91074 Herzogenaurach (DE); Schütz, Hartmut, Dipl.-Ing., 91336 Heroldsbach (DE); Haller, Georg, Dipl.-Inf., 91058 Erlangen (DE)

(57) **Zusammenfassung**

Fehlersicheres Automatisierungssystem mit Standard-CPU und Verfahren für ein fehlersicheres Automatisierungssystem

Die Erfindung betrifft ein fehlersicheres Automatisierungssystem mit Standard-CPU und ein Verfahren für ein fehlersicheres Automatisierungssystem. Das fehlersichere Automatisierungssystem besteht aus:
- einer oder mehreren Standard-CPU-Baugruppen (CPU) zur Verarbeitung von Sicherheitsfunktionen
- einer oder mehreren fehlersicheren Peripheriebaugruppen (F-SM, speziell bei Ausgaben: F-DO-SM) zur fehlersicheren Eingabe vom Prozeß und fehlersicheren Ausgabe an den Prozeß
- einem oder mehreren Kommunikationskanälen (Kommunikationsmedien und ggf. Kommunikationsbaugruppen) zur Kommunikation zwischen CPUs und F-SMs sowie zwischen CPUs.

## Beschreibung

Fehlersicheres Automatisierungssystem mit Standard-CPU und Verfahren für ein fehlersicheres Automatisierungssystem

Die Erfindung betrifft ein fehlersicheres Automatisierungssystem mit Standard-CPU und ein Verfahren für ein fehlersicheres Automatisierungssystem.

Der Erfindung liegt die Aufgabe zugrunde, ein fehlersicheres Automatisierungssystem und ein Verfahren für ein fehlersicheres Automatisierungssystem anzugeben.

Diese Aufgabe wird durch ein Automatisierungssystem sowie ein Verfahren mit den in den Ansprüchen 1 bzw. 20 angegebenen Merkmale gelöst. Vorteilhafte Ausgestaltungen ergeben sich aus den Unteransprüchen.

Ein weiteres der Erfindung zugrunde liegende Problem wird im folgenden beschrieben: Wenn von einem Prozeß oder einer Maschine eine Gefahr für Mensch oder Umwelt ausgeht, werden zur Risikoreduzierung häufig fehlersichere Automatisierungssysteme eingesetzt. In der Prozeßtechnik werden diese meist auch hochverfügbar ausgelegt.

I.a. gibt es einen unmittelbar erreichbaren sicheren Zustand, d.h. eine unmittelbare Abschaltung durch das fehlersichere Automatisierungssystem zieht keine Gefahr für Mensch oder Umwelt nach sich. Diese Erfindung bezieht sich auf derartige Anwendungen.

Wenn das fehlersichere Automatisierungssystem wegen eines Fehlers die eigentliche Sicherheitsfunktion nicht mehr ausführen kann, muß die Fehlerreaktionsfunktion ausgeführt werden. Die Fehlerreaktionsfunktion führt eine Abschaltung aller Ausgänge der Sicherheitsfunktion durch.

Nach DIN V VDE 0801/A1 müssen in einem fehlersicheren Automatisierungssystem Maßnahmen zur Fehlervermeidung und Fehlerbeherrschung mit einer der Anforderungsklasse entsprechenden Wirksamkeit getroffen werden. Die in Standard-Automatisierungsgeräten getroffenen Maßnahmen - insbesondere zur Fehlerbeherrschung - sind i.a. nicht ausreichend. Daher wurden spezielle fehlersichere Automatisierungssysteme entwickelt, z.B. von HIMA, Honeywell SMS, Pilz, Siemens und Triconex. Die an den Sicherheitsfunktionen beteiligten Komponenten dieser Automatisierungssysteme - insbesondere die CPUs - mußten fehlersicher sein.

Mit dieser Erfindung werden die folgenden Zielsetzungen verfolgt:
1. Zur Realisierung der Sicherheitsfunktionen sollen weitgehend Standard-Baugruppen eingesetzt werden können. Insbesondere sollen Standard-CPUs eingesetzt werden können, weil wegen der zunehmenden Komplexität der CPUs die Entwicklung spezieller fehlersicherer CPUs immer aufwendiger wird. Erweiterungen der Standard-CPUs sind akzeptabel, wenn sie so minimal sind, daß sie in den Standard übernommen werden können.
2. Das Automatisierungssystem soll bereits mit nur einer Standard-CPU fehlersicher sein (mindestens für Safety Integrity Level 2 nach IEC 61508 und Anforderungsklasse 4 nach DIN V VDE 0801).
3. Das fehlersichere Automatisierungssystem soll neben den Sicherheitsfunktionen auch nicht sicherheitsgerichtete Funktionen ausführen können.
4. Standard-Baugruppen sollen ohne Nachweis ihrer Rückwirkungsfreiheit einsetzbar sein.
5. Eine neue Version der Standard-CPU soll ohne erneuten Sicherheitsnachweis einsetzbar sein. Sollte die neue Version sicherheitskrittsche Änderungen enthalten, muß das fehlersichere Automatisierungssystem alle sicherheitsgerichteten Ausgänge abschalten.

Die Zielsetzungen 1 und 2 werden durch den Hauptanspruch der Erfindung erreicht. Die Zielsetzungen 3 bis 5 durch Nebenansprüche.

Der Erfindung liegt die Erkenntnis zugrunde, daß bisherige Lösungen Nachteile aufweisen. Für die Zielsetzungen 1 und 2 gibt es folgende Lösungen:
1. Coded Processor: Form, P.: Vital coded microprocessor principles and application for various transit systems; in Perrin, J.P.: Control, Computers, Communications in Transportation. Selected Papers from the IFAC/IFIP/IFORS Symposium, Pergamon, Oxford, UK, 1990, p.79-84.
2. DE 43 12 305 C2 :
   - Die sicherheitsgerichteten Operanden werden durch komplementäre Ablage gesichert.
   - Die sicherheitsgerichteten Operationen werden diversitär durchgeführt.
   - Selbsttests werden bei der Initialisierung und (zur Erkennung von Zweitfehlern in der Hardware) im Hintergrund durchgeführt.
   - Sicherheitsgerichtete Eingaben und Ausgaben erfolgen über fehlersichere Ein/Ausgabe-Geräte.
   - Eine zeitliche Programmlaufkontrolle findet durch die fehlersicheren Ausgabe-Geräte statt.

Die Zielsetzung 3 wird von den meisten fehlersicheren Automatisierungssystemen erfüllt.
Dies wird i.a. dadurch erreicht, daß gefährliche Rückwirkungen nicht sicherheitsgerichteter Funktionen auf sicherheitsgerichtete Funktionen *vermieden* werden. Beispiele:
- Vermeidung gefährlicher Rückwirkungen nicht fehlersicherer Baugruppen auf fehlersichere Baugruppen durch galvanische Trennung (siehe auch Zielsetzung 4)
- Vermeidung von Schreibzugriffen nicht sicherheitsgerichteter Funktionen auf sicherheitsgerichtete Daten durch entsprechende Speicherschutzmechanismen (Memory Protection)
- sicherheitsgerichteter Entwicklungsprozeß auch für die nicht sicherheitsgerichteten Funktionen
Die oben beschriebenen Lösungen zu den Zielsetzungen 1 und 2 zeichnen sich dadurch aus, daß sie gefährliche Rückwirkungen nicht sicherheitsgerichteter Funktionen auf sicherheitsgerichtete Funktionen z.T. auch *beherrschen*.

### Zielsetzung 4:

- Der Coded Processor erreicht diese Zielsetzung teilweise: Rückwirkungen auf den Coded Processor werden beherrscht, elektrische Rückwirkungen auf die fehlersicheren Eingangsbaugruppen und den Dynamic Controller müssen jedoch durch galvanische Trennung verhindert werden.
- Die im Patent DE 43 12 305 C2 genannte Erfindung erreicht diese Zielsetzung nicht: Standard-Baugruppen müssen rückwirkungsfrei auf die CPU sein. Die fehlersicheren Ein/Ausgabe-Geräte beinhalten eine galvanische Trennung von den Standard-Baugruppen.

Für die Zielsetzung 5 ist bisher keine Lösung bekannt.

### Der erfinderische Schritt dieser Erfindung liegt in

- der Hardware-Architektur des fehlersicheren Automatisierungssystems,
- der Software-Architektur der CPU und
- der Kombination der Maßnahmen zur Fehlerbeherrschung und Fehlervermeidung.

Erst durch diese Kombination lassen sich alle 5 Zielsetzungen verwirklichen.

Im folgenden wird die Erfindung anhand der in den Figuren dargestellten Ausführungsbeispiele näher beschrieben und erläutert.

Es zeigen:

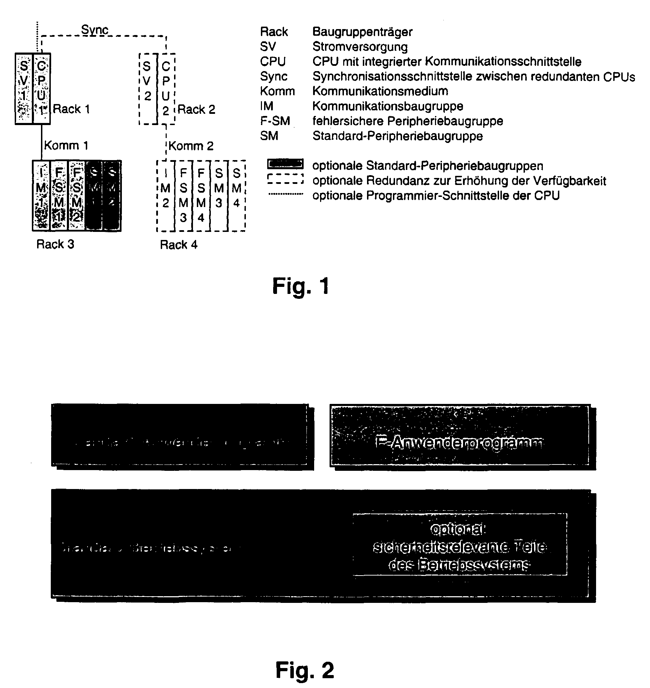

- FIG 1: ein Blockschaltbild eines Ausführungsbeispiels eines Automatisierungssystems und
- FIG 2: eine schematische Darstellung für den Grundaufbau der Struktur der fehlersicheren Software des Automatisierungssystems.

Im folgenden wird getrennt nach Hardware, Software und Fehlerbeherrschungsmaßnahmen auf die jeweiligen Lösungsansätze eingegangen.

### Hardware-Architektur

### Hauptanspruch

Bezüglich der Hardwarearchitektur besteht folgender Hauptanspruch:

Das fehlersichere Automatisierungssystem besteht aus:
- einer oder mehreren Standard-CPU-Baugruppen (CPU) zur Verarbeitung von Sicherheitsfunktionen
- einer oder mehreren fehlersicheren Peripheriebaugruppen (F-SM, speziell bei Ausgaben: F-DO-SM) zur fehlersicheren Eingabe vom Prozeß und fehlersicheren Ausgabe an den Prozeß
- einem oder mehreren Kommunikationskanälen (Kommunikationsmedien und ggf. Kommunikationsbaugruppen) zur Kommunikation zwischen CPUs und F-SMs sowie zwischen CPUs
Die fehlersicheren Peripheriebaugruppen sind Rechner, deren Sicherheitsfunktion in der fehlersicheren Eingabe vom Prozeß und/oder der fehletsicheren Ausgabe an den Prozeß sowie der sicherheitsgerichteten Kommunikation mit einer oder mehreren CPUs besteht. Ihre Fehlersicherheit wird durch bekannte Prinzipien erreicht (Z.B. wie in einer SIMATIC S5-95F) und ist nicht Gegenstand dieser Erfindungsmeldung.

### Nebenansprüche

- Optional verarbeiten die CPUs auch nicht sicherheitsgerichtete Funktionen. Zur Eingabe vom Prozeß und Ausgabe an den Prozeß werden auch nicht fehlersichere Standard-Peripheriebaugruppen eingesetzt. Die nicht sicherheitsgerichtete Kommunikation zwischen nicht sicherheitsgerichteten Funktionen der CPUs und nicht fehlersicheren Standard-Peripheriebaugruppen sowie zwischen nicht sicherheitsgerichteten Funktionen auf verschiedenen CPUs erfolgt über dieselben oder andere Kommunikationskanäle wie im Hauptanspruch.
- Optional wird durch Redundierung von CPUs, Peripheriebaugruppen und Kommunikationskanälen die Verfügbarkeit und/oder Sicherheit erhöht.
- Optional haben die CPUs eine Schnittstelle, über die Software in die CPU geladen werden kann (Programmier-Schnittstelle), z.B. eine serielle Schnittstelle oder eine Schnittstelle für ein Speichermodul.

### Software-Architektur der CPU

### Hauptanspruch

Die Software der CPUs besteht aus Betriebssystem und Anwenderprogramm.
Das Anwenderprogramm wird aufgeteilt in:
- F-Anwenderprogramm zur Realisierung von Sicherheitsfunktionen
- Standard-Anwenderprogramm zur Realisierung von nicht sicherheitsgerichteten Funktionen

Das Anwenderprogramm wird mit Hilfe einer Erstellsoftware erzeugt.

Damit das Betriebssystem der CPU unverändert oder höchstens mit minimalen Erweiterungen verwendet werden kann, werden Fehlerbeherrschungsmaßnahmen in das F-Anwenderprogramm integriert.

### Nebenansprüche

Wenn das Betriebssystem der CPU neben der zyklischen Ausführung des F-Anwenderprogramms weitere sicherheitsrelevante Funktionen enthält, sind weitere Fehlerbeherrschungsmaßnahmen erforderlich. Alternativen:
- Überprüfung der Ausführung der sicherheitsrelevanten Funktion durch das F-Anwenderprogramm (z.B. bei Selbsttests oder Hintergrundtests durch das CPU-Betriebssystem, Fehlerbeherrschungsmaßnahmen 6 bzw. 7)
- Diversitäre Realisierung der sicherheitsrelevanten Funktion außerhalb des CPU-Betriebssystems (z.B. beim Zugriffsschutz, Fehlerbeherrschungsmaßnahme 11)
- Diversitäre Realisierung der sicherheitsrelevanten Funktion innerhalb des CPU-Betriebssystems (z.B. bei der Ermittlung des RAM-Ausbaus beim RAM-Test durch das CPU-Betriebssystem, Ausführungsbeispiel zu Fehlerbeherrschungsmaßnahme 7)

### Maßnabmen zur Fehlerbeherrschung (z.T. auch zur Fehlervermeidung)

### Hauptanspruch

### 1. Sicherheitsprotokoll

Sicherheitsgerichtete Kommunikation wird durch ein Sicherheitsprotokoll gesichert. Das Sicherheitsprotokoll deckt gefährliche Fehler auf dem Kommunikationskanal bis hin zu den Sicherheitsprotokoll-Treibern auf - einschließlich gefährlicher Fehler in zur Kommunikation verwendeten Teilen der Hardware (z.B. Kommunikations-Schnittstellen) und Software (z.B. Protokoll-Layer unterhalb des Sicherheitsprotokolls) der CPUs und F-SMS. Dieses Sicherheitsprotokoll basiert auf einem Sicherheitstelegramm mit Nutzdaten, CRC und Lebenszeichen.

### 2. Zeitliche Programmlaufkontrolle

Die Bearbeitung des F-Anwenderprogramms erfolgt zyklisch. Die Ausgaben des F-Anwenderprogramms an F-DO-SMs oder F-Anwenderprogramme auf anderen CPUs erfolgen ebenfalls zyklisch. Die empfangenden F-DO-SMs bzw. F-Anwenderprogramme auf anderen CPUs erwarten daher innerhalb einer Überwachungszeit ein neues (erkennbar am Lebenszeichen) und fehlerfreies (erkennbar am CRC) Sicherheitstelegramm. Andernfalls leiten sie eine Fehlerreaktion ein. Die Fehlerreaktion kann z.B. darin bestehen, statt der alten oder fehlerhaften Daten aus dem Sicherheitstelegramm sichere Ersatzwerte zu verwenden.

### 3. Logische Programmlauf- und Datenflußkontrolle

Zur Sicherung gegen Fehler bei der Adressierung von sicherheitskritischem Code und sicherheitskritischen Daten bildet das F-Anwenderprogramm während seiner Abarbeitung eine Signatur über die logischen Adressen des abgearbeiteten Code und der verwendeten Daten. Bei entsprechender Signaturbildung geht auch die Reihenfolge der Adressierung in die Signatur ein.

Der Vergleich dieser zur Laufzeit berechneten Signatur mit den zulässigen - von der Erstellsoftware berechneten - Signaturen kann intern oder - bei höheren Sicherheitsanforderungen - extern erfolgen:
- Interner Vergleich:
   *Vor der Ausgabe* sicherheitskritischer Daten - an F-DO-SMs oder F-Anwenderprogramme auf anderen CPUs - vergleicht das F-Anwenderprogramm selbst die zur Laufzeit berechnete Signatur mit den zulässigen von der Erstellsoftware berechneten Signaturen. Wenn die zur Laufzeit berechnete Signatur nicht zulässig ist, führt das F-Anwenderprogramm die Ausgabe sicherheitskritischer Daten nicht durch oder kennzeichnet die ausgegebenen sicherheitskritischen Daten als fehlerhaft.
- Externer Vergleich:
   Bei der Ausgabe sicherheitskritischer Daten - an F-DO-SMs oder F-Anwenderprogramme auf anderen CPUs - gibt das F-Anwenderprogramm auch die zur Laufzeit berechnete Signatur aus. Die *empfangenden* F-DO-SMs bzw. F-Anwenderprogramme auf anderen CPUs vergleichen diese zur Laufzeit berechnete Signatur mit den zulässigen von der Erstellsoftware berechneten Signaturen. Wenn die zur Laufzeit berechnete Signatur nicht zulässig ist, wird eine Fehlerreaktion eingeleitet, z.B. indem sichere Ersatzwerte ausgegeben bzw. weiterverarbeitet werden.
   Der Vergleich von Soll- und Istwert der Signatur durch F-DO-SMs bzw. F-Anwenderprogramme auf anderen CPUs kann durch folgendes Verfahren besonders geschickt erfolgen: Bei der Bildung des CRCs des Sicherheitstelegramms an diese Empfänger wird der CRC zusätzlich mit dem Sollwert der Signatur durch eine Operation Op verknüpft und mit dem Istwert der Signatur durch eine dazu inverse Operation Op⁻¹ verknüpft. Damit der CRC bei Gleichheit von Soll- und Istwert der Signatur stimmt, muß (CRC Op Signatur) Op⁻¹ Signatur gleich dem ursprünglichen CRC sein. Damit der externe Vergleich wirksamer als der interne Vergleich ist, müssen die Operationen Op und Op⁻¹ zum Vergleich diversitär sein.

Das F-Anwenderprogramm kann aus Teilen mit eigenen logischen Programmlauf- und Datenflußkontrollen bestehen.

### 4. Datensicherung

Sicherheitskritische Daten werden durch eine den jeweiligen Sicherheitsanforderungen entsprechende Informationsredundanz gesichert. Die Informationsredundanz wird - wie die zugehörigen Daten - bei Initialisierungswerten durch die Erstellsoftware und bei Aktualwerten durch F-Anwenderprogramme in den CPUs bzw. durch F-SMs erzeugt.

### 5. Diversitäre Verarbeitung

Die Verarbeitung der Sicherheitsfunktionen auf der CPU erfolgt diversitär, d.h. die Berechnungen werden wiederholt oder überprüft unter Verwendung anderer Teile der CPU oder unter verschiedenartiger Verwendung derselben Teile der CPU.

Durch den Vergleich diversitär ermittelter Ergebnisse werden sowohl Fehler bei der Berechnung als auch Verfälschungen der Daten erkannt, wenn sie sich auf das Ergebnis auswirken. I.a. genügt es, die Endergebnisse, die an den Prozeß ausgegeben werden, zu vergleichen. Bei starker Informationsreduzierung können auch Zwischenergebnisse verglichen werden. Zum Vergleich kann die komplette Information eines Ergebnisses verwendet werden (z.B. das Ergebnis selbst oder dessen Komplement) oder eine reduzierte Information, z.B. eine Prüfsumme über das Ergebnis.

Der Vergleich wird intern und/oder extern durchgeführt:
- Interner Vergleich:
   Der Vergleich wird von derselben Hardware wie die diversitären Berechnungen durchgeführt, d.h. von derselben CPU. In diesem Fall ist es schwierig, nachzuweisen, daß ein Fehler nicht sowohl das Ergebnis des Vergleichs und das übernommene Ergebnis der Berechnungen gefährlich verfälscht (Common-Cause-Fehler), d.h. daß auch der Vergleich der Ergebnisse und die Berechnung des übernommenen Ergebnisses diversitär sind.
- Externer Vergleich:
   Der Vergleich findet in einer anderen Hardware wie die diversitären Berechnungen statt. Eine elegante Möglichkeit besteht darin, den externen Vergleich durch den Empfänger der Ergebnisse durchführen zu lassen, d.h. F-DO-SMs bzw. F-Anwenderprogramme auf anderen CPUs. In diesem Fall ist das folgende Verfahren besonders geschickt: Die Nutzdaten des gesendeten Sicherheitstelegramms werden aus den Ergebnissen gebildet, der CRC des Sicherheitstelegramms wird aus den diversitär ermittelten Ergebnissen berechnet. Der Vergleich der diversitär ermittelten Ergebnisse erfolgt dann durch die Überprüfung des CRCs durch den Empfänger.

### 6.Selbsttests innerhalb der Prozeßfehlertoleranzzeit

Befehle, die nicht diversitär realisiert werden können, werden innerhalb der Prozeßfehlertoleranzzeit getestet.

Diese Selbsttests werden auch in die logische und zeitliche Programmlaufkontrolle des F-Anwenderprogramms eingebunden.

Diese Selbsttests können auch Teil des Betriebssystems der CPU sein. In diesem Fall überprüft das F-Anwenderprogramm durch eine zeitliche und logische Programmlaufkontrolle der Selbsttests deren rechtzeitige und vollständige Durchführung innerhalb der Prozeßfehlertoleranzzeit.

### 7. Hintergrundtests innerhalb der Mehrfehlereintrittszeit

Da die Erkennung von Fehlern durch den Vergleich diversitär ermittelter Ergebnisse datenabhängig ist, werden im Hintergrund Selbsttests durchgeführt, bevor durch weitere Fehler die Erkennung und Beherrschung der Fehler nicht mehr gewährleistet ist.

Diese Hintergrundtests werden auch in die logische und zeitliche Programmlaufkontrolle des F-Anwenderprogramms eingebunden.

Diese Hintergrundtests können auch Teil des Betriebssystems der CPU sein. In diesem Fall überprüft das F-Anwenderprogramm durch eine zeitliche und logische Programmlaufkontrolle der Hintergrundtests deren rechtzeitige und vollständige Durchführung innerhalb der Mehrfehlereintrittszeit.

### Nebenansprüche

### 8. Zusätzliche zeitliche Programmlaufkontrolle in der CPU

Optional führt die CPU - zusätzlich zur Fehlerbeherrschungsmaßnahme 2 - selbst eine Zeitüberwachung der zyklischen Bearbeitung des F-Anwenderprogramms durch, damit lokalisiert werden kann, ob der Fehler in der CPU liegt.

### 9. Schutz der F-SMs vor Rückwirkungen von Standard-Baugruppen

Durch die im Hauptanspruch genannten Fehlerbeherrschungsmaßnahmen werden auch Rückwirkungen von Standard-Baugruppen auf die Abarbeitung des F-Anwenderprogramms in der CPU beherrscht.

Wenn die F-SMs elektrische Rückwirkungen von Standard-Baugruppen nicht beherrschen, müssen sie von nicht rückwirkungsfreien Standard-Baugruppen galvanisch getrennt werden. Je nach Lage der Standard-Baugruppen erfolgt die galvanische Trennung in den F-SMs, der CPU oder dem Kommunikationskanal dazwischen.

### 10. Überprüfung der Zulässigkeit der CPU-Version (Hardware/Betriebssystem)

Wenn es CPU-Versionen mit unterschiedlichen sicherheitsrelevanten Eigenschaften der Hardware und/ oder des Betriebssystems gibt, überprüft das F-Anwenderprogramm zur Laufzeit die Zulässigkeit der CPU-Version anhand einer oder mehrerer Kennungen. Diese Fehlerbeherrschungsmaßnahme ist für die Zielsetzung 5 erforderlich.

### 11. Zugriffsschutz

Sicherheitsrelevanter Code und sicherheitsrelevante Daten in der CPU müssen vor unberechtigten und ungewollten modifizierenden Zugriffen geschützt werden. Wenn dies nicht mechanisch (z.B. abgeschlossener Schaltschrank) und/ oder durch organisatorische Maßnahmen erreicht wird, muß in der CPU eine Legitimationsprüfung (Z.B. eines Paßworts) realisiert werden. Bei CPUs, in die das F-Anwenderprogramm über ein Kommunikationsnetzwerk geladen werden kann, ist i.a. eine Legitimationsprüfung erforderlich.

Eine Legitimationsprüfung kann dadurch fehlersicher gestaltet werden, daß sie diversitär sowohl in der CPU als auch in dem zugreifenden Gerät (z.B. Programmiergerät) implementiert wird.

Wenn bei der Legitimation zwischen sicherheitsrelevantem und nicht sicherheitsrelevantem Code (bzw. Daten) unterschieden werden soll, müssen diese unterscheidbar sein, z.B. durch ein Attribut im Bausteinkopf von Codebausteinen. Wenn die CPU - und das zugreifende Gerät (z.B. Programmiergerät) - Schreibfunktionen auf Code oder Daten enthalten, die für sicherheitsrelevanten Code bzw. sicherheitsrelevante Daten generell nicht verwendet werden sollen, können derartige Schreibzugriffe durch folgendes Verfahren auch beherrscht werden:
1. Der sicherheitsrelevante Code bzw. die sicherheitsrelevanten Daten werden mit Informationsredundanz codiert. Wenn die Informationsredundanz durch Check-Bits erreicht wird, ist die Decodierung trivial, d.h. Code bzw. Daten sind leicht lesbar. Beispiele:
   - Diversitärer Code
   - CRC über Code oder Konstanten
   - Inverse Daten
2. Zur Laufzeit wird in der CPU die Gültigkeit dieser Codierungen überprüft. Beispiele:
   - Vergleich diversitär ermittelter Ergebnisse
   - CRC-Check
   - Vergleich inverser Daten
   Wenn eine Codierung ungültig ist, wird die Fehlerreaktionstunktion ausgeführt.
3. Bei dieser Schreibfunktion werden keine gültigen Codierungen erzeugt:
   - Eine manuelle Codierung ist zu aufwendig oder nicht möglich, weil die Codierung unbekannt ist.
   - Die zugreifenden Geräte beherrschen bei dieser Funktion die Codierung nicht.

### Der erfinderische Schritt liegt in

- der Hardware-Architektur des fehlersicheren Automatisierungssystems,
- der Software-Architektur der CPU und
- der Kombination der Maßnahmen zur Fehlerbeherrschung und Fehlervermeidung.

Erst durch diese Kombination lassen sich alle 5 Zielsetzungen verwirklichen.

Diese Erfindung stellt eine neue Lösung für ein fehlersicheres Automatisierungssystem auf Basis einer nicht redundanten Standard-CPU dar, die hinsichtlich Sicherheit und Laufzeit zwischen Coded Processor und dem Patent DE 43 12 305 C2 angesiedelt ist.

Vom Patent DE 43 12 305 C2 hebt sie sich außerdem durch die bessere Fehlerbeherrschung ab, insbesondere durch die - im Hauptanspruch genannte - leistungsfähige Programmlauf- und Datenflußkontrolle und den externen Vergleich der diversitär ermittelten Ergebnisse, so daß Anforderungsklasse 6 (statt 4) nach DIN V VDE 0801 erreicht wird und Rückwirkungen von Standard-Baugruppen auf die CPU beherrscht werden.

Von beiden hebt sie sich außerdem ab durch
- die flexible Hardware-Architektur mit skalierbarer Verfügbarkeit und Sicherheit (Patentanmeldung 98P3991DE)
- das Sicherheitsprotokoll (Patentanmeldung 98P3214DE)
- die Einsetzbarkeit einer neuen Version der Standard-CPU ohne erneuten Sicherheitsnachweis, insbesondere durch
   • die Überprüfung von Selbsttests und/oder Hintergrundtests im Betriebssystem der CPU zur Laufzeit durch das F-Anwenderprogramm,
   • die Überprüfung der Zulässigkeit der CPU-Version zur Laufzeit durch das F-Anwenderprogramm und
   • die fehlersichere Realisierung des Zugriffsschutzes.

### zu 3. Logische Programmlauf- und Datenflußkontrolle

Das F-Anwenderprogramm besteht aus einer zyklischen Folge von Aufrufen sicherheitsgerichteter Funktionsbausteine (F-FBs). Diese F-FBs haben Eingangs- und Ausgangsparameter. Bei der Parameterübergabe werden Ausgangsparameter des einen F-FBs in die Eingangsparameter des anderen F-FBs kopiert. Die instanzspezifischen Daten der F-FBs werden in Instanz-Datenbausteinen (Instanz-DBs) abgelegt. Die Instanz-DBs mit den Aktualwerten befinden sich im Arbeitsspeicher. Die Instanz-DBs mit den Initialisierungswerten befinden sich im Ladespeicher und werden beim Kaltstart in den Arbeitsspeicher kopiert.

Alle diese sicherheitsrelevanten Objekte haben eine diversitäre logische Adresse:
- Die F-FBs enthalten in ihrem Code einen eindeutigen FB-Identifier (FB_ID).
- Die Instanz-DBs enthalten einen eindeutigen DB-Identifier (DB_ID).
- Die Ausgangsparameter enthalten einen eindeutigen Parameter-Identifier (PAR_ID).
- Die Instanz-DBs mit den Initialisierungswerten unterscheiden sich von den Instanz-DBs mit den Aktualwerten nach dem ersten Zyklus des F-Anwenderprogranms durch den Wert ihrer statischen Variable DB_INIT, der von jedem F-FB im ersten Zyklus von TRUE in FALSE geändert wird.

Ein F-FB F_PLK zur logischen Programmlaufkontrolle wird nach den Eingaben und Berechnungen und vor den Ausgaben aufgerufen. Er gibt die Ausgaben nur frei, wenn die Ist-Signatur in seinem Instanz-DB mit einer der Soll-Signaturen übereinstimmt (interner Vergleich).

Diese Ist-Signatur wir am Ende eines jeden F-FBs aktualisiert, indem der F-FB die Ist-Signatur mit den PAR_IDs aller sicherheitsrelevanten Eingangsparameter, mit DB_INIT und DB_ID seines Instanz-DBs und mit seiner eigenen FB_ID XOR-verknüpft und anschließend um eine Stelle nach links rotiert. Durch die Rotation geht die Reihenfolge der Abarbeitung in die Ist-Signatur ein.

### zu 4. Datensicherung

Sicherheitskritische Daten werden durch inverse Speicherung gesichert:
- Zusätzlich zu den Daten selbst wird auch das Einer-Komplement gespeichert.
- Bei Daten, die kleiner als die geforderte Informationsredundanz sind, kann die geforderte Informationsredundanz durch Wiederholung der inversen Speicherung erreicht werden.
- Die Daten und ihr Komplement können zur leichteren Adressierung als Struktur modelliert werden.

### Beispiel:

Eine sicherheitskritische Variable vom Datentyp BOOL wird als Struktur F_BOOL modelliert:

| Struktur-Komponente | Datentyp | Beispeil-Wert |
|---|---|---|
| Daten (Data) | BOOL | 1 |
| Parameter-Identifier (PAR_ID, s.o.) | WORD | 14 |
| Komplement (COMPLEM) | WORD | 0 |

Bei der Kommunikation mit F-SMs und anderen CPUs werden sicherheitskritische Daten durch einen CRC im Sicherheitstelegramm gesichert.

### zu 5. Diversitäre Verarbeitung

Jeder Codebaustein besteht aus zwei Teilen. Beispiel: Binäre UND-Verknüpfung von A und B.
- Standard-Teil:
   Aus den Operanden.DATA wird gemäß der Sicherheitsfunktion Ergebnis.DATA berechnet.
   Beispiel: Binäre UND-Verknüpfung von A.DATA und B.DATA im Bit-Rechenwerk.
- Diversitärer Teil:
   Aus den Operanden.COMPLEM wird diversitär Ergebnis.COMPLEM berechnet.
   Beispiel: Wortweise ODER-Verknüpfung von A.COMPLEM und B.COMPLEM
   im Integer-Rechenwerk.

Beim Vergleich der diversitär ermittelten Ergebnisse erhöht eine Kombination von internem und externem Vergleich die Fehlererkennung und ermöglicht die Lokalisierung, ob der Fehler in der CPU oder in F-DO-SMs bzw. anderen CPUs liegt:
1. Externer Vergleich:
   - Der Vergleich wird durch diejenige Hardware durchgeführt, die die Ergebnisse ausgibt oder weiterverarbeitet, d.h. F-DO-SMs bzw. andere CPUs. Diese können im Fehlerfall sichere Ersatzwerte ausgeben bzw. weiterverarbeiten.
   - Die Sicherheitstelegramme an F-DO-SMs werden diversitär gebildet:
      • Die Nutzdaten werden aus den DATA-Komponenten der zu übertragenden Daten gebildet.
      • Der CRC wird aus den COMPLEM-Komponenten der zu übertragenden Daten berechnet.
      Der Vergleich erfolgt durch CRC-Check in den F-DO-SMs.
   - Die Nutzdaten der Sicherheitstelegramme an andere CPUs enthalten sowohl die DATA- als auch die diversitär berechneten COMPLEM-Komponenten der zu übertragenden Daten.
      Der Vergleich, d.h. die Kontrolle, ob DATA und COMPLEM komplementär sind, erfolgt in der empfangenden CPU.
2. Interner Vergleich:
   Die F-FBs zur Ausgabe an F-DO-SMs bzw. andere CPUs vergleichen DATA und COMPLEM der zu übertragenden Daten. Im Fehlerfall werden sichere Ersatzwerte ausgegeben.

### zu 7. Hintergrundtests innerhalb der Mehrfehlereintrittszeit

Das Betriebssystem führt im Hintergrund innerhalb der Mehrfehlereintrittszeit folgende Selbsttests durch:
- Test des Prozessors, der das F-Anwenderprogramm ausführt
- Test aller RAM-Bereiche, die Aktualwerte sicherheitsrelevanter Daten enthalten können
- CRC-Prüfung von sicherheitsrelevantem Code (F-Anwenderprogramm, sicherheitsrelevante Teile des Betriebssystems) und sicherheitsrelevanten Initialisierungswerten

Das F-Anwenderprogramm überprüft durch eine zeitliche und logische Programmlaufkontrolle die rechtzeitige und vollständige Durchführung der Hintergrundtests.

Zur Überprüfung der Vollständigkeit des RAM-Tests ermittelt das Betriebssystem den RAM-Ausbau diversitär zur Ermittlung des RAM-Ausbaus für den RAM-Test.

### zu 10. Überprüfung der Zulässigkeit der CPU-Version

- Der Prozessor, der das F-Anwenderprogram verarbeitet, hat eine auslesbare Kennung für seine Diversitätseigenschaften. Das F-Anwenderprogramm überprüft diese Kennung zur Laufzeit.
- Fehlersichere Zeitfunktionen basieren auf dem Vergleich eines Hardware-Timers mit einem redundanten Hardware-Timer mit unabhängiger Zeitbasis (Z.B. anderem Quarz). Wenn eine CPU-Version keinen redundanten Hardware-Timer hat, wird dies durch den Vergleich erkannt.

## Patentansprüche

1. Automatisierungssystem bestehend aus:
• einer oder mehreren Standard-CPU-Baugruppen (CPU) zur Verarbeitung von Sicherheitstunktionen
• einer oder mehreren fehlersicheren Peripheriebaugruppen (F-SM, speziell bei Ausgaben: F-DO-SM) zur fehlersicheren Eingabe vom Prozeß und fehlersicheren Ausgabe an den Prozeß
• einem oder mehreren Kommunikationskanälen (Kommunikationsmedien und ggf. Kommunikationsbaugruppen) zur Kommunikation zwischen CPUs und F-SMs sowie zwischen CPUs,
wobei die Software der CPUs aus Betriebssystem und Anwenderprogramm besteht, wobei das Anwenderprogramm aufgeteilt ist in:
• F-Anwenderprogramm zur Realisierung von Sicherheitsfunktionen und
• Standard-Anwenderprogramm zur Realisierung von nicht sicherheitsgerichteten Funktionen
und wobei das Anwenderprogramm mit Hilfe einer Erstellsoftware erzeugt wird und in das F-Anwenderprogramm folgende Fehlerbeherrschungsmaßnahmen integriert sind:
a. die sicherheitsgerichtete Kommunikation wird durch ein Sicherheitsprotokoll gesichert, wobei das Sicherheitsprotokoll gefährliche Fehler auf dem Kommunikationskanal bis hin zu den Sicherheitsprotokoll-Treibern aufdeckt - einschließlich gefährlicher Fehler in zur Kommunikation verwendeten Teilen der Hardware,
b. das System weist Mittel zur zeitlichen Programmlaufkontrolle auf, wobei die Bearbeitung des F-Anwenderprogramms und die Ausgaben des F-Anwenderprogramms an F-DO-SMs oder F-Anwenderprogramme auf anderen CPUs zyklisch erfolgen, wobei die empfangenden F-DO-SMs bzw. F-Anwenderprogramme auf anderen CPUs innerhalb einer Überwachungszeit ein neues und fehlerfreies Sicherheitstelegramm erwarten und bei Nichterfüllung der Erwartung eine Fehlerreaktion einleiten,
c. zur Sicherung gegen Fehler bei der Adressierung von sicherheitskritischem Code und sicherheitskritischen Daten bildet das F-Anwenderprogramm während seiner Abarbeitung eine Signatur über die logischen Adressen des abgearbeiteten Code und der verwendeten Daten, wobei der Vergleich dieser zur Laufzeit berechneten Signatur mit den zulässigen - von der Erstellsoftware berechneten - Signaturen CPU-intern oder - bei höheren Sicherheitsanforderungen - CPU-extern erfolgt, wobei das F-Anwenderprogramm aus Teilen mit eigenen logischen Programmlauf- und Datenflußkontrollen bestehen kann,
d. sicherheitskritische Daten werden durch eine den jeweiligen Sicherheitsanforderungen entsprechende Informationsredundanz gesichert, wobei die Informationsredundanz - wie die zugehörigen Daten - bei Initialisierungswerten durch die Erstellsoftware und bei Aktualwerten durch F-Anwenderprogramme in den CPUs bzw. durch F-SMs erzeugt wird,
e. die Verarbeitung der Sicherheitsfunktionen auf der CPU erfolgt diversitär, insbesondere werden die Berechnungen wiederholt oder überprüft unter Verwendung anderer Teile der CPU oder unter verschiedenartiger Verwendung derselben Teile der CPU, wobei das System Mittel zum Vergleich diversitär ermittelter Ergebnisse aufweist, wodurch sowohl Fehler bei der Berechnung als auch Verfälschungen der Daten erkennbar sind, wobei zum Vergleich die komplette Information eines Ergebnisses, insbesondere das Ergebnis selbst oder dessen Komplement, oder eine reduzierte Information, insbesondere eine Prüfsumme über das Ergebnis, verwendet wird, wobei der Vergleich intern und/oder extern durchführbar ist, wobei bei einem internen Vergleich der Vergleich von derselben Hardware wie die diversitären Berechnungen durchgeführt wird und bei externem Vergleich der Vergleich in einer anderen Hardware wie die diversitären Berechnungen stattfindet.

2. Automatisierungssystem nach Anspruch 1,
**dadurch gekennzeichnet,**
daß die CPUs auch zur Verarbeitung von nicht sicherheitsgerichteten Funktionen vorgesehen sind, daß zur Eingabe vom Prozeß und Ausgabe an den Prozeß auch nicht fehlersichere Standard-Peripheriebaugruppen vorgesehen sind, wobei die nicht sicherheitsgerichtete Kommunikation zwischen nicht sicherheitsgerichteten Funktionen der CPUs und nicht fehlersicheren Standard-Peripheriebaugruppen sowie zwischen nicht sicherheitsgerichteten Funktionen auf verschiedenen CPUs über dieselben oder andere Kommunikationskanäle erfolgt.

3. Automatisierungssystem nach einem der Ansprüche 1 oder 2,
**dadurch gekennzeichnet,**
daß zur Erhöhung der Verfügbarkeit und/oder der Sicherheit CPUs, Peripheriebaugruppen und Kommunikationskanälen redundant ausgebildet sind.

4. Automatisierungssystem nach einem der Ansprüche 1 bis 3,
**dadurch gekennzeichnet,**
daß die CPUs eine Schnittstelle zum Laden von Software, insbesondere eine serielle Schnittstelle oder eine Schnittstelle für ein Speichermodul aufweisen.

5. Automatisierungssystem nach einem der Ansprüche 1 bis 4,
**dadurch gekennzeichnet,**
daß das Betriebssystem der CPU neben der zyklischen Ausführung des F-Anwenderprogramms weitere sicherheitsrelevante Funktionen enthält, gegen deren Versagen folgende Fehlerbeherrschungsmaßnahmen getroffen werden:
• Überprüfung der Ausführung der sicherheitsrelevanten Funktion durch das F-Anwenderprogramm (z.B. bei Selbsttests oder Hintergrundtests durch das CPU-Betriebssystem) oder
• Diversitäre Realisierung der sicherheitsrelevanten Funktion außerhalb des CPU-Betriebssystems oder
• Diversitäre Realisierung der sicherheitsrelevanten Funktion innerhalb des CPU-Betriebssystems.

6. Automatisierungssystem nach einem der Ansprüche 1 bis 5,
**dadurch gekennzeichnet,**
daß das Sicherheitsprotokoll auf einem Sicherheitstelegramm mit Nutzdaten, CRC und Lebenszeichen basiert.

7. Automatisierungssystem nach einem der Ansprüche 1 bis 6,
**dadurch gekennzeichnet,**
daß beim internen Vergleich (siehe c. im Anspruch 1), wenn festgestellt wird, daß die zur Laufzeit berechnete Signatur nicht zulässig ist, das F-Anwenderprogramm die Ausgabe sicherheitskritischer Daten nicht durchführt oder die ausgegebenen sicherheitskritischen Daten als fehlerhaft kennzeichnet.

8. Automatisierungssystem nach einem der Ansprüche 1 bis 7,
**dadurch gekennzeichnet,**
daß beim externen Vergleich (siehe c. im Anspruch 1) von Soll- und Istwert der Signatur durch F-DO-SMs bzw. F-Anwenderprogramme auf anderen CPUs das F-Anwenderprogramm auch die zur Laufzeit berechnete Signatur ausgibt, wobei die *empfangenden* F-DO-SMs bzw. F-Anwenderprogramme auf anderen CPUs diese zur Laufzeit berechnete Signatur mit den zulässigen von der Erstellsoftware berechneten Signaturen vergleichen, wobei dann, wenn die zur Laufzeit berechnete Signatur nicht zulässig ist, eine Fehlerreaktion eingeleitet wird, insbesondere indem sichere Ersatzwerte ausgegeben bzw. weiterverarbeitet werden.

9. Automatisierungssystem nach einem der Ansprüche 1 bis 8,
**dadurch gekennzeichnet,**
daß zum externen Vergleich (siehe c. im Anspruch 1) von Soll- und Istwert der Signatur durch F-DO-SMs bzw.
F-Anwenderprogramme auf anderen CPUS bei der Bildung des CRCs des Sicherheitstelegramms an diese Empfänger der CRC zusätzlich mit dem Sollwert der Signatur durch eine Operation Op verknüpft und mit dem Istwert der Signatur durch eine dazu inverse Operation Op⁻¹ verknüpft wird, so daß der CRC bei Gleichheit von Soll- und Istwert der Signatur unverändert bleibt, wobei bei CRC-Fehlern sichere Ersatzwerte ausgegeben oder weiterverarbeitet werden.

10. Automatisierungssystem nach einem der Ansprüche 1 bis 9,
**dadurch gekennzeichne**
daß zur Durchführung eines externen Vergleichs (siehe e. im Anspruch 1) der Empfänger der Ergebnisse vorgesehen ist, insbesondere F-DO-SMs bzw. F-Anwenderprogramme auf anderen CPUs.

11. Automatisierungssystem nach einem der Ansprüche 1 bis 10,
**dadurch gekennzeichnet,**
daß die Nutzdaten des gesendeten Sicherheitstelegramms aus den Ergebnissen gebildet werden und der CRC des Sicherheitstelegramms aus den diversitär ermittelten Ergebnissen berechnet wird, und daß der Vergleich der diversitär ermittelten Ergebnisse durch die Überprüfung des CRCs durch den Empfänger erfolgt (siehe e. im Anspruch 1).

12. Automatisierungssystem nach einem der Ansprüche 1 bis 11,
**dadurch gekennzeichnet,**
daß Befehle, die nicht diversitär realisiert werden können, innerhalb der Prozeßfehlertoleranzzeit getestet werden, wobei diese Selbsttests auch in die logische und zeitliche Programmlaufkontrolle des F-Anwenderprogramms eingebunden werden, wobei die Selbsttests auch Teil des Betriebssystems der CPU sein können und in diesem Fall das F-Anwenderprogramm durch eine zeitliche und logische Programmlaufkontrolle der Selbsttests deren rechtzeitige und vollständige Durchführung innerhalb der Prozeßfehlertoleranzzeit überprüft.

13. Automatisierungssystem nach einem der Ansprüche 1 bis 12,
**dadurch gekennzeichnet,**
daß in die logische und zeitliche Programmlaufkontrolle des F-Anwenderprogramms Hintergrundtests eingebunden sind, die auch Teil des Betriebssystems der CPU sein können, wobei in diesem Fall das F-Anwenderprogramm durch eine zeitliche und logische Programmlaufkontrolle der Hintergrundtests deren rechtzeitige und vollständige Durchführung innerhalb der Mehrfehlereintrittszeit überprüft.

14. Automatisierungssystem nach einem der Ansprüche 1 bis 13,
**dadurch gekennzeichnet,**
daß zur Lokalisierung, ob der Fehler in der CPU liegt, als zusätzliche zeitliche Programmlaufkontrolle in der CPU die CPU selbst eine Zeitüberwachung der zyklischen Bearbeitung des F-Anwenderprogramms durchführt.

15. Automatisierungssystem nach einem der Ansprüche 1 bis 14,
**dadurch gekennzeichnet,**
daß zum Schutz der F-SMs vor Rückwirkungen von Standard-Baugruppen eine galvanische Trennung in den F-SMs, der CPU oder dem Kommunikationskanal vorgesehen ist.

16. Automatisierungssystem nach einem der Ansprüche 1 bis 15,
**dadurch gekennzeichnet,**
daß zur Überprüfung der Zulässigkeit der CPU-Version das F-Anwenderprogramm zur Laufzeit die Zulässigkeit der CPU-Version anhand einer oder mehrerer Kennungen überprüft.

17. Automatisierungssystem nach einem der Ansprüche 1 bis 16,
**dadurch gekennzeichnet,**
daß als Zugriffsschutz von sicherheitsrelevantem Code und sicherheitsrelevanten Daten in der CPU eine Legitimationsprüfung vorgesehen ist.

18. Automatisierungssystem nach einem der Ansprüche 1 bis 17,
**dadurch gekennzeichnet,**
daß eine Legitimationsprüfung dadurch fehlersicher gestaltet wird, daß sie diversitär sowohl in der CPU als auch in dem zugreifenden Gerät, insbesondere einem Programmiergerät implementiert wird.

19. Automatisierungssystem nach einem der Ansprüche 1 bis 18,
**dadurch gekennzeichnet,**
daß dann, wenn die CPU - und das zugreifende Gerät, insbesondere das Programmiergerät - Schreibfunktionen auf Code oder Daten enthalten, die für sicherheitsrelevanten Code bzw. sicherheitsrelevante Daten generell nicht verwendet werden sollen, derartige Schreibzugriffe durch folgende Maßnahmen beherrscht werden:
a. Der sicherheitsrelevante Code bzw. die sicherheitsrelevanten Daten werden mit Informationsredundanz codiert, insbesondere durch diversitären Code, CRC über Code oder Konstanten oder durch inverse Daten.
b. Zur Laufzeit wird in der CPU die Gültigkeit dieser Codierungen überprüft, insbesondere durch Vergleich diversitär ermittelter Ergebnisse, CRC-Check bzw. Vergleich inverser Daten, wobei dann, wenn eine Codierung ungültig ist, die Fehlerreaktionsfunktion ausgeführt wird.

20. Verfahren zur Sicherstellung eines fehlersicheren Automatisierungssystem bestehend aus:
• einer oder mehreren Standard-CPU-Baugruppen (CPU) zur Verarbeitung von Sicherheitsfunktionen
• einer oder mehreren fehlersicheren Peripheriebaugruppen (F-SM, speziell bei Ausgaben: F-DO-SM) zur fehlersicheren Eingabe vom Prozeß und fehlersicheren Ausgabe an den Prozeß
• einem oder mehreren Kommunikationskanälen (Kommunikationsmedien und ggf. Kommunikationsbaugruppen) zur Kommunikation zwischen CPUs und F-SMs sowie zwischen CPUs,
wobei die Software der CPUs aus Betriebssystem und Anwenderprogramm besteht, wobei das Anwenderprogramm aufgeteilt ist in:
• F-Anwenderprogramm zur Realisierung von Sicherheitsfunktionen und
• Standard-Anwenderprogramm zur Realisierung von nicht sicherheitsgerichteten Funktionen,
und wobei das Anwenderprogramm mit Hilfe einer Erstellsoftware erzeugt wird und in das F-Anwenderprogramm folgende Feblerbeherrschungsmaßnahmen integriert sind:
a. die sicherheitsgerichtete Kommunikation wird durch ein Sicherheitsprotokoll gesichert, wobei das Sicherheitsprotokoll gefährliche Fehler auf dem Kommunikationskanal bis hin zu den Sicherheitsprotokoll-Treibern aufdeckt - einschließlich gefährlicher Fehler in zur Kommunikation verwendeten Teilen der Hardware,
b. das System weist Mittel zur zeitlichen Programmlaufkontrolle auf, wobei die Bearbeitung des F-Anwenderprogramms und die Ausgaben des F-Anwenderprogramms an F-DO-SMs oder F-Anwenderprogramme auf anderen CPUs zyklisch erfolgen, wobei die empfangenden F-DO-SMs bzw. F-Anwenderprogramme auf anderen CPUs innerhalb einer Überwachungszeit ein neues und fehlerfreies Sicherheitstelegramm erwarten und bei Nichterfüllung der Erwartung eine Fehlerreaktion einleiten,
c. zur Sicherung gegen Fehler bei der Adressierung von sicherheitskritischem Code und sicherheitskritischen Daten bildet das F-Anwenderprogramm während seiner Abarbeitung eine Signatur über die logischen Adressen des abgearbeiteten Code und der verwendeten Daten, wobei der Vergleich dieser zur Laufzeit berechneten Signatur mit den zulässigen - von der Erstellsoftware berechneten - Signaturen CPU-intern oder - bei höheren Sicherheitsanforderungen - CPU-extern erfolgt, wobei das F-Anwenderprogramm aus Teilen mit eigenen logischen Programmlauf- und Datenflußkontrollen bestehen kann,
d. sicherheitskritische Daten werden durch eine den jeweiligen Sicherheitsanforderungen entsprechende Informationsredundanz gesichert, wobei die Informationsredundanz - wie die zugehörigen Daten - bei Initialisierungswerten durch die Erstellsoftware und bei Aktualwerten durch F-Anwenderprogramme in den CPUs bzw. durch F-SMs erzeugt wird,
e. die Verarbeitung der Sicherheitsfunktionen auf der CPU erfolgt diversitär, insbesondere werden die Berechnungen wiederholt oder überprüft unter Verwendung anderer Teile der CPU oder unter verschiedenartiger Verwendung derselben Teile der CPU, wobei das System Mittel zum Vergleich diversitär ermittelter Ergebnisse aufweist, wodurch sowohl Fehler bei der Berechnung als auch Verfälschungen der Daten erkennbar sind, wobei zum Vergleich die komplette Information eines Ergebnisses, insbesondere das Ergebnis selbst oder dessen Komplement, oder eine reduzierte Information, insbesondere eine Prüfsumme über das Ergebnis, verwendet wird, wobei der Vergleich intern und/oder extern durchführbar ist, wobei bei einem internen Vergleich der Vergleich von derselben Hardware wie die diversitären Berechnungen durchgeführt wird und bei externem Vergleich der Vergleich in einer anderen Hardware wie die diversitären Berechnungen stattfindet.
